# EUROPEAN PATENT SPECIFICATION

(11) **EP 2 974 250 B1**
(45) Date of publication and mention of the grant of the patent: **15.02.2017**
(21) Application number: 14717041.9
(22) Date of filing: 14.03.2014
(51) Int. Cl.: H04M 3/42, H04W 88/06

(54) **HANDLING MULTIPLE VOICE CALLS IN MULTIPLE SIM MOBILE PHONE**
HANDHABUNG VON SPRACHANRUFEN IN EINEM MOBILTELEFON MIT MEHREREN SIM-KARTEN
GESTION D'APPELS VOCAUX MULTIPLES SUR TÉLÉPHONE PORTABLE À PLUSIEURS CARTES SIM

(30) Priority: 15.03.2013 US 201313831803
(43) Date of publication of application: 20.01.2016
(73) Proprietor: Qualcomm Incorporated, San Diego, CA 92121-1714 (US)
(72) Inventor: VARGHESE, Vinay, Hyderabad Andhra Pradesh 500 001 (IN); PODDAR, Manish, Hyderabad Andhra Pradesh 500 001 (IN)
(74) Representative: Dunlop, Hugh Christopher
(86) International application number: PCT/US2014/028596
(87) International publication number: WO 2014/144263

(56) References cited:
- US-A1- 2011 212 737
- US-A1- 2012 021 755

## Description

### FIELD

The present invention relates generally to multi-SIM wireless communication devices, and more particularly to methods of using multi-SIM capabilities to participate in simultaneous discreet communications.

### BACKGROUND

Multi-SIM wireless devices have become increasing popular in recent years because of the versatility that they provide, particularly in countries where there are many service providers. For example, dual-SIM smart phones allow a user to implement two different plans or service providers on the same cellular telephone, each with separate telephone numbers and bills (e.g., a business account/number and a personal account/number). Also, during travel, users can obtain local SIM cards and pay local call rates in the destination country. By using multiple SIMs, a user can take advantage of different pricing plans, and save on mobile data usage. Thus, dual-SIM wireless devices effectively provide users with two phones, without the need to carry two separate devices.

Dual-SIM mobile phones have developed in recent years because of the flexibility they provide to users. Using dual-SIM devices, users avoid the need to carry two phones at the same time, such as one for business and one for personal use. Further, by using multiple SIMs, a user can taken advantage of different pricing plans, and save on mobile data usage.

Instead of requiring a user to switch between SIMs, some newer dual-SIM devices are configured for dual-SIM dual active (DSDA) operation. DSDA devices, which typically have two radio transmitter/receiver circuits (referred to herein as RF resources), allow both SIMs to be active (i.e., supporting telecommunications via a network) at the same time. In this manner, simultaneous independent communications are enabled. However, while a DSDA device allows a user to engage in simultaneous active calls, a user cannot generally participate in two separate telephone calls at the same time. Therefore, at least some capabilities of a DSDA device may not be fully realized by users.

US2011/212737 describes a mobile device that includes the following functionality: (1) Simultaneous texting during ongoing voice communication, providing a text waiting mode for both single number mobile communication devices and multiple number mobile communication devices; (2) Dynamic area code determination and automatic pre-pending of area codes when a requested voice or text communication is inititated without the area code while the mobile communication device is outside of its home-base area code toll area; (3) Enhanced editing functionality for applications on mobile computing devices; (4) Automatic toggle from manual texting mode to voice-to-text based communication mode on detection of high velocity movement of the mobile communication device.

US2012/021755 describes a base station sending an allocation for a first call with a first subscriber identity to a UE that supports multiple subscriber identities, wherein the allocation for the first call comprises allocation of at least a first uplink time slot and at least a first downlink time slot in a frequency carrier and send the UE allocation for a second call with a second subscriber identity, wherein the allocation for the second call comprises allocation of at least a second uplink time slot and at least a second downlink time slot in the frequency carrier, wherein the second uplink time slot is different than the first uplink time slot.

### SUMMARY

The various embodiments provide a method for a user to engage in simultaneous calls on a DSDA device using speech-to-text and text-to-speech conversions on a second call. By converting speech from a second incoming voice call to text that is displayed on the DSDA device, and converting text entered by the user to speech that is played to the second caller, the user can maintain real-time communications discreetly with two different parties at the same time.

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.
FIG. 1 is a communication system block diagram of a wireless communication system suitable for use with the various embodiments.
FIG. 2 is a block diagram illustrating a dual-SIM dual active wireless communications device according to an embodiment.
FIGs. 3A and 3B are process flow diagrams illustrating an embodiment method for determining appropriate handing of simultaneously active voice calls.
FIGs. 4A and 4B are block diagrams illustrating the interaction between components of a wireless device using voice/text conversation mode according to an embodiment.
FIG. 5 is a block diagram illustrating components of a server that provides voice and text conversions to a wireless device using voice/text conversation mode according to an embodiment.
FIG. 6 is a process flow diagram illustrating an embodiment method for handling simultaneous active and incoming voice calls on a wireless device.
FIG. 7 is a process flow diagram illustrating an embodiment method for providing voice and text conversion services on a server.
FIG. 8 is a component diagram of another example mobile device suitable for use with the various embodiments.
FIG. 9 is a component diagram of another example mobile device suitable for use with the various embodiments.
FIG. 10 is a component diagram of an example server suitable for use with the various embodiments

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The terms "wireless device" and "wireless communication device" are used interchangeably herein to refer to any one or all of cellular telephones, smart phones, personal or mobile multi-media players, personal data assistants (PDAs), laptop computers, tablet computers, smart books, palm-top computers, wireless electronic mail receivers, multimedia Internet enabled cellular telephones, wireless gaming controllers, and similar personal electronic devices that include a programmable processor and memory and circuitry for establishing wireless communication pathways and transmitting/receiving data via wireless communication pathways.

As used herein, the terms "SIM", "SIM card" and "subscriber identification module" are used interchangeably to mean an integrated circuit, embedded into a removable card, that stores an International Mobile Subscriber Identity (IMSI), related keys, and/or other information used to identify and/or authenticate a wireless device to a wireless telecommunication network. The term SIM may also be used as shorthand reference to a particular communication network or subscriber account with which the SIM is associated, since the information stored in a SIM enables the wireless device to establish a communication link with a particular network, thus the SIM and the communication network correlate to one another.

As used herein, the terms "multi-SIM wireless device" "dual-SIM device" "dual-SIM dual active device" and "DSDA device" are used interchangeably to describe a wireless device that is configured with more than one SIM and is capable of independently handling communications with networks of both subscriptions.

The various embodiments improve user experience on a DSDA device by utilizing the dual active capability and enabling the user to maintain multiple calls with multiple parties simultaneously, without requiring a conference call. A DSDA device user may be engaged in an active call with a first party when an incoming voice call is received from a second party. In the various embodiments, the first call may proceed as normal over the speaker/headphone on the device, while the second call may be handled using a "voice/text conversation mode" while still maintaining the active first call.

In the various embodiments, each SIM of a multi-SIM wireless device may enable communications over different communications networks using the same or different wireless communication protocols. In another embodiment, two or more SIMs may enable communications over the same network using the same wireless communications protocol. In the various embodiments, each SIM may enable communications over its network using the different RF resources of the multi-SIM wireless device. In the various embodiments, a multi-SIM wireless device may be a dual-SIM dual active (DSDA) device in which each SIM is associated with an independent RF resource (e.g., independent RF transceivers).

The methods of the various embodiments may be utilized for calls on the networks associated with either SIM. While the terms "first" and "second" may be used herein to describe the SIMs and associated networks, such identifiers are merely for convenience and are not meant to limit the various embodiments to a particular order, sequence, type of network, or carrier. Further, the embodiments may be employed in multi-SIM wireless devices with more than two RF resources and more than two SIM cards to enable simultaneous communications with three or more parties in a similar manner.

In the various embodiments, audio capture may include receiving audio inputs via a microphone of the multi-SIM wireless device and preparing the audio inputs for transmission, as well as converting received data to audio outputs via a speaker of the wireless device. In the various embodiments, calls may include continuous streams of audio data exchanged between wireless devices and/or servers. While example embodiments are discussed in terms of operations performed to transmit and receive streams of data during audio calls (i.e., voice calls), the various embodiment methods may also be implemented to transmit and receive video calls (i.e., audio and video calls or video only calls). While example embodiments are discussed in terms of operations to switch a call between networks associated with two SIMs, additional SIMs and network connections may be enabled in a multi-SIM wireless device.

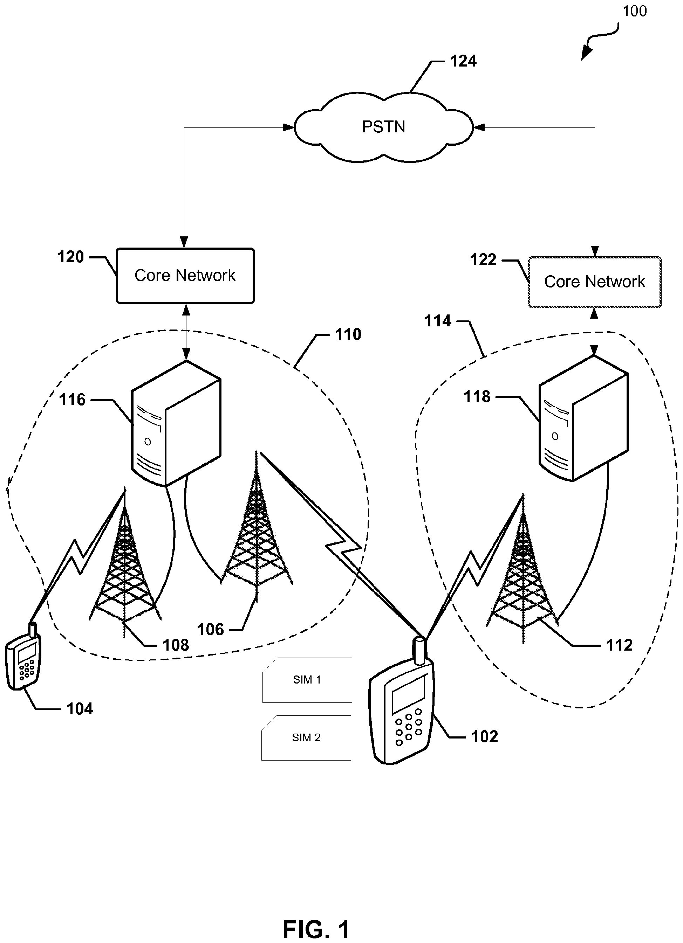

FIG. 1 illustrates a wireless network system 100 suitable for use with the various embodiments. Wireless devices 102, 104 may be configured to establish wireless connections with cell towers or base stations of one or more radio access networks. For example, wireless devices 102, 104 may transmit/receive data using base stations 106, 108, which may be part of a network 110, as is known in the art. Wireless device 102 may further be configured to transmit/receive data through base station 112, which may be part of a different network 114.

The wireless networks 110, 114 may be cellular data networks, and may use channel access methods including, but not limited to, Frequency Division Multiple Access (FDMA), Time Division Multiple Access (TDMA), Code Division Multiple Access (CDMA), Universal Mobile Telecommunications Systems (UMTS) (particularly, Long Term Evolution (LTE)), Global System for Mobile Communications (GSM), Wi-Fi, PCS, G-3, G-4, or other protocols that may be used in a wireless communications network or a data communications network. Networks 110, 114 may use the same or different wireless interfaces and/or physical layers. In an embodiment, base stations 106, 108, 112 may be controlled by one or more base station controllers (BSC) 116, 118. For example, base stations 106, 108, BSC 116, and other components may form network 110, as is known in the art. Alternate network configurations may also be used and the embodiments are not limited to the configuration illustrated. For example, in another embodiment the functionality of the BSC 116 and at least one of base stations 106, 108 may be collapsed into a single "hybrid" module having the functionality of these components.

In the various embodiments, a wireless device 102 may simultaneously access two (or more) core networks 120, 122 after camping on cells managed by two (or more) base stations 106, 112. Wireless device 102 may also establish connections with Wi-Fi access points, which may connect to the Internet. While the various embodiments are particularly useful with wireless networks, the embodiments are not limited to wireless networks and may also be implemented over wired networks with no changes to the methods.

In wireless network system 100, wireless device 102 may be a multi-SIM wireless device that is capable of operating on a plurality of networks or subscriptions supported by a plurality of SIMs. For example, the wireless device 102 may be a dual-SIM device. Using dual-SIM functionality, the wireless device 102 may simultaneously access two core networks 120, 122 by camping on cells managed by two base stations 106, 112. Core networks 120, 122 may be interconnected by public switched telephone network (PSTN) 124, across which the core networks 120, 122 may route various incoming and outgoing communications to the wireless device 102.

The wireless device 102 may make a voice or data call to a third party device, such as wireless device 104, using one of the SIMs. The wireless device 102 may also receive a voice call or other data transmission from a third party. The third party device (e.g., wireless device 104) may be any of a variety of devices, including, but not limited to, a mobile phone, laptop computer, PDA, server, etc.).

A SIM in the various embodiments may be a Universal Integrated Circuit Card (UICC) that is configured with SIM and/or USIM applications, enabling access to GSM and/or UMTS networks. The UICC may also provide storage for a phone book and other applications. Alternatively, in a CDMA network, a SIM may be a UICC removable user identity module (R-UIM) or a CDMA subscriber identity module (CSIM).

Each SIM card may have a CPU, ROM, RAM, EEPROM and I/O circuits. The SIM cards used in the various embodiments may contain user account information, an international mobile subscriber identity (IMSI), a set of SIM application toolkit (SAT) commands and storage space for phone book contacts. A micro-processing unit (MCU) of a baseband chip may interact with MCUs of SIM cards to retrieve data or SAT commands from the SIM cards installed in a wireless device. A wireless device may be immediately programmed after plugging in the SIM card. SIM cards may be also programmed to display custom menus for personalized services. A SIM card may further store a Home Public-Land-Mobile-Network (HPLMN) code to indicate the SIM card network operator provider. An Integrated Circuit Card Identity (ICCID) SIM serial number is printed on the SIM card for identification.

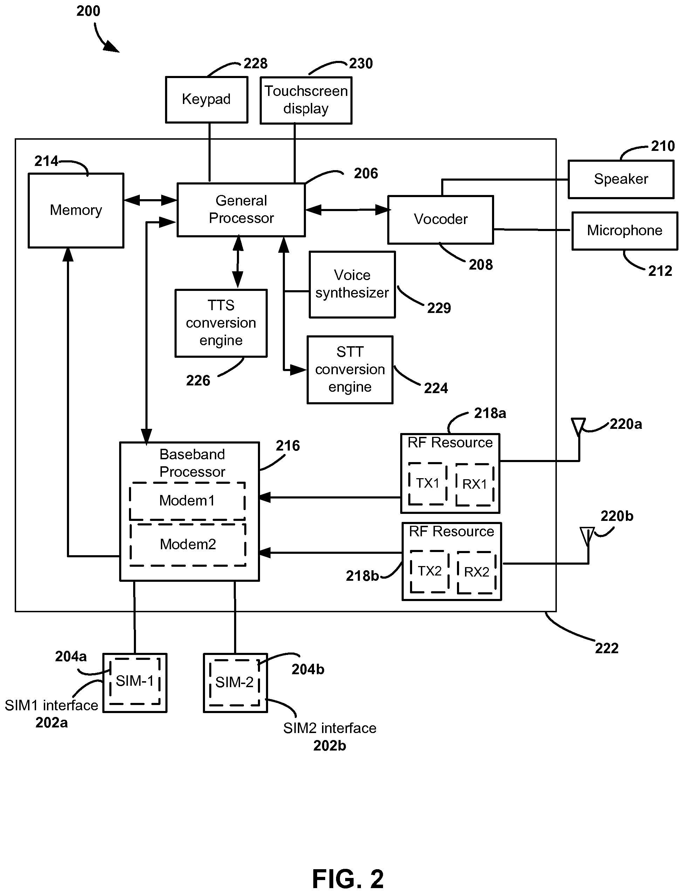

FIG. 2 is a functional block diagram of a multi-SIM wireless device 200 that is suitable for implementing the various embodiments. The multi-SIM wireless device 200 may include a first SIM interface 202a, which may receive a first identity module SIM-1 204a that is associated with the first subscription. The multi-SIM wireless device 200 may also include a second SIM interface 202b, which may receive a second identity module SIM-2 204b that is associated with the second subscription.

The multi-SIM wireless device 200 may include at least one controller, such as a general processor 206, which may be coupled to an audio codec (vocoder) 208. The vocoder 208 may in turn be coupled to a speaker 210 and a microphone 212. The general processor 206 may also be coupled to at least one memory 214. The memory 214 may be a non-transitory tangible computer readable storage medium that stores processor-executable instructions. For example, the instructions may include routing communication data relating to the first or second subscription though a corresponding baseband -RF resource chain.

The memory 214 may store operating system (OS), as well as user application software and executable instructions. The memory 214 may also store application data, such as pre-determined user preference settings and/or rules for automatically determining when to commence voice/text conversation mode. Such settings or rules may configure the multi-SIM wireless device processor to automatically enter the voice/text conversation mode when a set of pre-determined rules stored in the memory 214 are satisfied.

The general processor 206 and memory 214 may each be coupled to at least one baseband modem processor 216. Each SIM in the multi-SIM wireless device 200 (e.g., SIM-1 202a and SIM-2 202b) may be associated with a baseband-RF resource chain. Each baseband-RF resource chain may include baseband modem processor 216 to perform baseband/modem functions for communications on a SIM, and one or more amplifiers and radios, referred to generally herein as RF resources 218. In an embodiment, the baseband-RF resource chains may share a common baseband modem processor 206 (i.e., a single device that performs baseband/modem functions for all SIMs on the wireless device). Alternatively, each baseband-RF resource chain may include physically or logically separate baseband modem processors (e.g., Modem1, Modem2). Baseband/modem functions may also be physically or logically integrated with the vocoder 208. For example, the vocoder and modem functions may be implemented in a digital signal processor.

The RF resources 218a, 218b may each be transceivers that perform transmit/receive functions for the associated SIM of the wireless device. The RF resources 218a, 218b may include separate transmit and receive circuitry, or may include a transceiver that combines transmitter and receiver functions. The RF resources 218a, 218b may be coupled to a wireless antenna (e.g., a first wireless antenna 220a and a second wireless antenna 220b). The memory 214 of the wireless device 200 may store an operating system (OS) and user application software.

In an embodiment, the general processor 206 may be coupled to a speech-to-text (STT) conversion engine 224, and to a text-to-speech (TTS) conversion engine 226. The STT conversion engine 224 may convert speech (i.e., voice stream) into text, and the TTS conversion engine 226 may convert text into speech. A voice synthesizer 229 to produce speech signals simulating a human voice may be coupled to the TTS conversion engine 226. In the various embodiments, the voice synthesizer 229 may be integrated with the vocoder 208 and/or the TTS conversion engine 226. In addition, the STT conversion engine 224, TTS conversion engine 226, and/or the vocoder 208 may be integrated into a single module, unit, component, or software. The STT conversion engine 226, TTS conversion engine 228, and voice synthesizer 229 may be implemented on a multi-SIM wireless device 200 as software modules in an application executed on an application processor and/or digital signal processor (DSP), as hardware modules (e.g., hardware components hard wired to perform such functions), or as combinations of hardware components and software modules executing on one or more device processors.

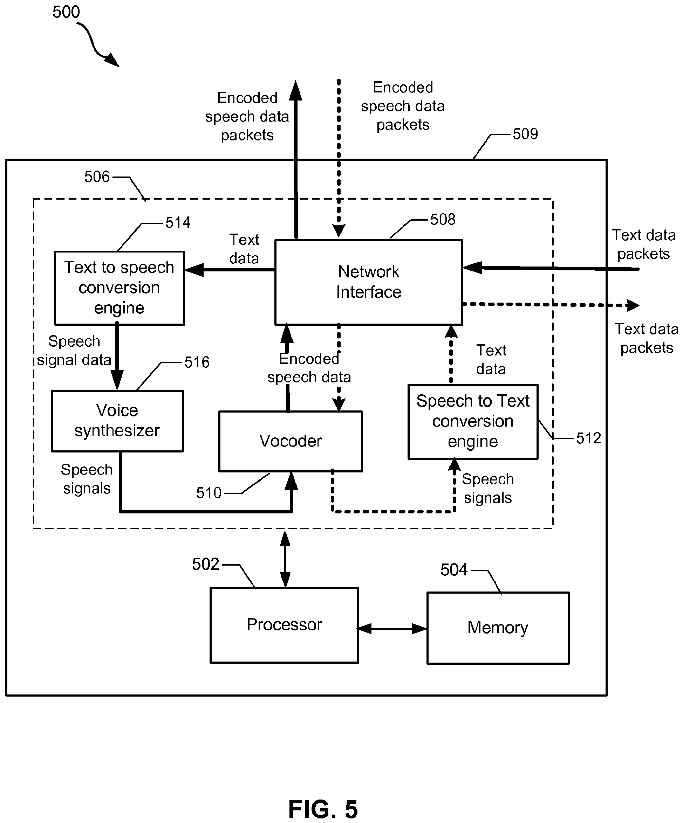

While STT conversion engine 226, TTS conversion engine 228, and voice synthesizer 229 are illustrated in FIG. 2 as being components or modules of the multi-SIM wireless device 200, in alternative embodiments, one or more of these components may be located on a server accessible through a wireless network, discussed in further detail below with respect to FIGs. 5-7.

In a particular embodiment, the general purpose processor 206, STT conversion engine 224, TTS conversion engine 226, memory 214, baseband processor(s) 216, and RF resources 218a, 218b may be included in a system-on-chip device 222. The first and second SIMs 202a, 202b and their corresponding interfaces 204a, 204b may be external to the system-on-chip device 222. Further, various input and output devices may be coupled to components of the system-on-chip device 216, such as interfaces or controllers. Example user input components suitable for use in the wireless device 200 may include, but are not limited to, a keypad 228 and a touchscreen display 230.

In an embodiment, the keypad 228, touchscreen display 230, microphone 212, or a combination thereof, may perform the function of receiving the request to initiate an outgoing call. For example, the touchscreen display 230 may receive a selection of a contact from a contact list or receive a telephone number. In another example, either or both of the touchscreen display 230 and microphone 212 may perform the function of receiving a request to initiate an outgoing call. For example, the touchscreen display 230 may receive selection of a contact from a contact list or to receive a telephone number. As another example, the request to initiate the outgoing call may be in the form of a voice command received via the microphone 212. Interfaces may be provided between the various software modules and functions in wireless device 200 to enable communication between them, as is known in the art.

In a particular embodiment, the general processor 202 memory 204, and baseband processor 206 may be included in a system-on-chip device 216. The first and second SIMs 208a, 208b and their corresponding interfaces 210a, 210b may be external to the system-on-chip device 216. Further, various input and output devices may be coupled to components of the system-on-chip device 216, such as interfaces or controllers.

In the various embodiments, a multi-SIM wireless device 200 may determine how to handle an incoming voice call on one SIM while participating in an active call on the other SIM. In the various embodiments, a user on an active call with a first party may select to handle the incoming voice call in a "voice/text conversation mode." In the voice/text conversation mode, the user may "talk" to the incoming voice caller by receiving and sending text, thereby allowing the user to engage in a second simultaneous call. Advantageously, voice/text conversation mode does not require any corresponding mode change (for example, to text) by the caller, and causes no disruption to the active voice call on the other SIM.

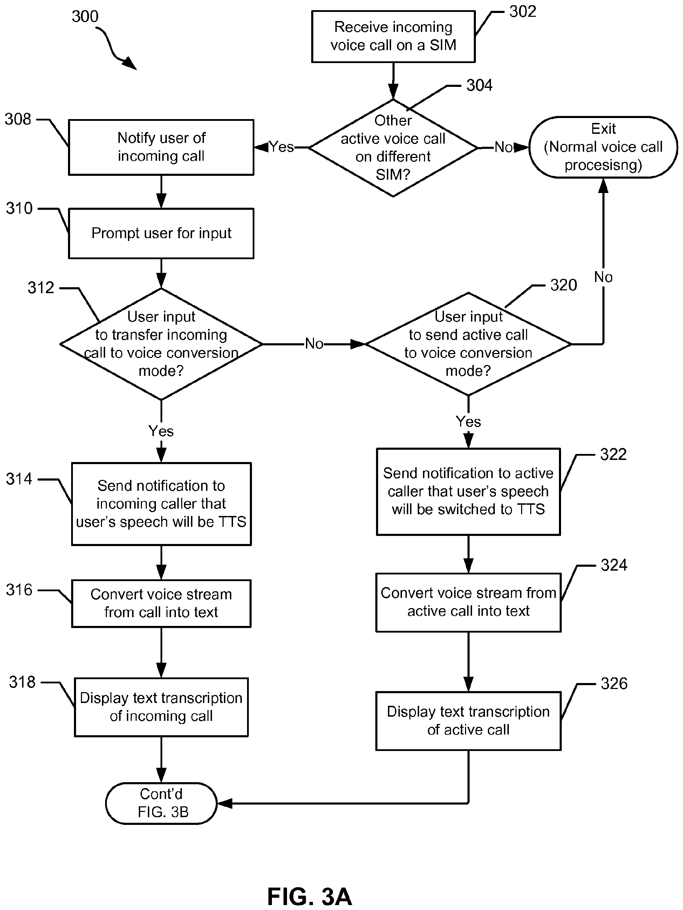

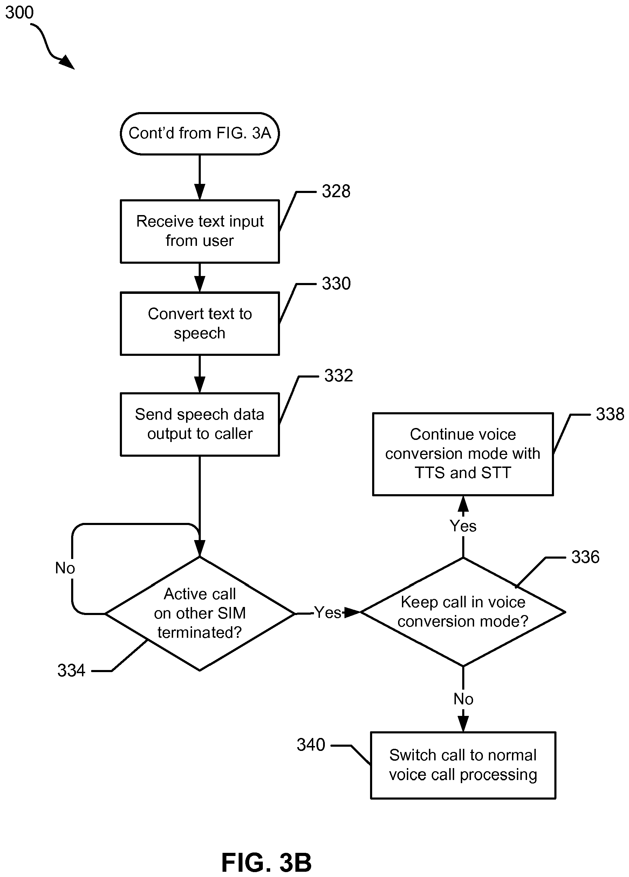

FIGs. 3A and 3B illustrate an embodiment method 300 for using the voice/text conversation mode on a wireless device configured to perform text to speech and speech to text conversions. The operations of method 300 may be implemented by one or more processors of a dual-SIM device, such as a general processor 206, DSP (not shown separately) and/or baseband processor 216 in the wireless device 200 described above with reference to FIG. 2.

Referring to FIG. 3A, the voice/text conversation mode may be initiated in method 300. In block 302, the wireless device may receive an incoming voice call on an RF resource associated with SIM-1. The wireless device may determine, in determination block 304, whether a voice call is already active on the device on an RF-resource associated with a different SIM (i.e., SIM-2). If there is no active call on the wireless device (i.e., determination block 304 = "No"), the incoming voice call may be handled according to normal call processing in block 306. If there is another active voice call on a different SIM (i.e., determination block 304 = "Yes"), the wireless device may notify the user of the incoming voice call, such as by playing an audio clip, blinking lights, displaying a notification message, etc., in block 308. In block 310, the wireless device user may be prompted for input to select whether to activate the voice/text conversation mode for call processing. In determination block 312, the wireless device may determine whether user input to use voice/text conversation mode was received for processing the incoming voice call.

If input was received to use voice/text conversation mode for processing the incoming voice call (i.e., determination block 312 = "Yes"), in block 314 the wireless device may send a notification to the incoming voice caller indicating that the user intends to answer and converse using the speech-to-text and text-to-speech process. This notification alerts the incoming voice caller that responses to spoken words or questions will be delayed while the called party reads the caller's words as text and then replies with machine-generated speech. That way, the calling party understands how the conversation will take place and is not surprised by any delay or hearing a computer-generated voice. Additionally, the calling party may choose to hang up if conversing in such a manner is not desirable. In block 316, the wireless device may convert the voice stream received from the incoming voice call into text, thus generating a transcription of the incoming voice call voice stream. In block 318, the wireless device may display the text transcript on a display of the multi-SIM wireless device.

If a user input was not received or the user declines to use the voice/text conversation mode for processing the incoming voice call (i.e., determination block 312 = "No"), the wireless device may determine whether the user input indicated a desire to use voice/text conversation mode for processing the active call (i.e., the first call), in determination block 320. If a user input was not received indicating a desire to use voice/text conversation mode for processing the active (i.e., first) call (i.e., determination block 320 = "No"), the wireless device may handle the incoming and active calls according to normal call processing methods (e.g., activating call-waiting, transferring the incoming voice call to voice mail, sending a pre-selected response, placing one of the calls on hold, etc.).

If a user input was received indicating a desire to the use voice/text conversation mode for processing the active (i.e., first) call (i.e., determination block 320 = "Yes"), the wireless device may send a notification to the active caller informing that party that user is about to switch to voice/text conversation mode in block 322. Again, this notification informs the first calling party that the user will be reading a transcript of the caller's speech and replying via text entry that will be played via a speech synthesizer. That way, the first calling party is not surprised by a sudden delay in responses or by hearing a computer-generated voice. Also as part of block 322, the incoming (i.e. second) called may be activated in the normal voice mode. In block 324, the wireless device may convert the voice stream from the previously active (i.e., first) call to text, generating a transcription of the active call voice stream. In block 326, the wireless device may display the text transcript on the wireless device. The operations implemented in blocks 322 - 326 may be the same as those in blocks 314 - 318, but applied to the first call voice stream.

In an alternative embodiment, the wireless device may automatically perform the functions of determination blocks 312 and 320, without requiring user input. That is, the wireless device may automatically apply voice/text conversation mode to calls according to one or more pre-determined rules. For example, a user may designate a particular contact or group of contacts as "high priority." If an incoming voice call is received from such contact, upon determining that another active call exists through a different SIM on the DSDA device, the DSDA device may automatically convert the active call to the voice/text conversation mode to allow the user to answer the high priority call according to normal voice call processes without having to hang up on the first call. Other rules may include various selection criteria such as time of day, relative priority of calls, location of DSDA device when call is received, etc.

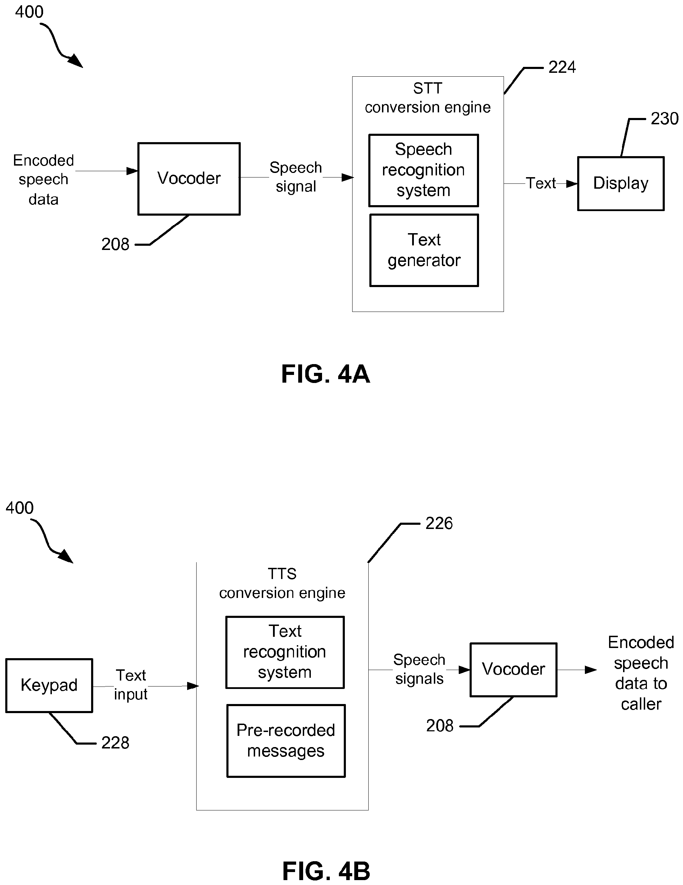

Referring now to FIG. 3B, which continues method 300, in block 328, the wireless device may receive text input from the user that the user intends to be sent in a voice stream to the caller (i.e., incoming voice caller or active caller). In block 330, the wireless device may convert the text input to speech data using text-to-speech conversion software, discussed in further detail below with respect to FIGs. 4A and 4B. In block 332, the wireless device may transmit the converted speech to the caller, such as via Modem1 or Modem2, depending on the applicable SIM. In determination block 334, the wireless device may determine whether the call that is operating in normal voice call processing mode on another SIM (i.e., not the call in voice/text conversation mode) has terminated. If the normal mode call has not terminated (i.e., determination block 334 = "No"), the wireless device repeats this determination as it continues to monitor the status of the normal mode call until that call is terminated.

When the wireless device processor determines that the normal mode call on the other SIM has terminated (i.e., determination block 334 = "Yes"), the wireless device may determine whether the voice/text conversation mode call should continue in voice/text conversation mode. This determination may involve informing the user that the second call may be converted to the normal mode, prompting the user for a further input, and handling that call according to a received user input. In an alternative embodiment, this determination may be based on pre-determined rules sets and/or default actions if a user does not respond to a prompt for input (e.g., automatically converting a speech/text conversion mode call to normal mode).

If the voice/text conversation mode call should not be kept in voice/text conversation mode (i.e., determination block 336 = "No"), the wireless device may switch that call to normal mode in determination block 336. If the voice/text conversation mode call should be kept in the voice/text conversation mode (i.e., determination block 336 = "Yes"), the wireless device may continue the voice/text conversation mode using cycles of speech to text and text to speech conversions.

The conversions of the caller's voice to text and the user's text input to voice may be accomplished using any of the various speech-to-text and text-to-speech conversion applications that are known in the art. FIGs. 4A and 4B illustrate in further detail the use of a TTS conversion engine and a STT conversion engine (for example, STT conversion engine 224 and TTS conversion engine 226 as shown in FIG. 2) implemented in the multi-SIM wireless device for voice/text conversation mode according to an embodiment.

Referring to FIG. 4A, an embodiment multi-SIM wireless device may receive a voice stream in a call from a third party device. The call may be, for example, an incoming voice call or active call as discussed above with respect to FIG. 3A. The voice stream may be encoded speech data modulated onto a carrier RF signal, which the wireless device may receive, demodulate, and provide to a vocoder (e.g., vocoder 208).

The vocoder 208 may include an encoder to encode speech signals into speech data packets and a decoder to decode speech data packets into speech signals. The vocoder 102 may be any type of vocoder, such as an enhanced variable rate coder (EVRC), Adaptive Multi-Rate (AMR), Fourth Generation vocoder (4GV), etc.

Speech data packets may be decoded by the vocoder 208, and the decoded speech signal may be input to a STT conversion engine 224 to convert the speech data to text. In the various embodiments, the STT conversion engine 224 may include a speech recognition system 402, and a text generator 404. The components of the STT conversion engine 224 may be implemented as separate devices, or may be logically separate modules within the same device. The STT conversion engine 224 may output text data, which may be displayed to the wireless device user, for example, on touchscreen 230.

Referring to FIG. 4B, in order to "speak" to the caller in the voice/text conversation mode (i.e., during incoming voice call or active call), the wireless device may receive text inputs from the user via a user interface, such as a touch screen or keypad. Notably, this text input to respond in the voice/text conversation mode may be occurring while the user is also participating in a normal voice call on the network of the other SIM in the multi-SIM wireless device. The multi-SIM wireless device may receive text inputs from the keypad 228 in voice/text conversation mode, and the text may be input to a TTS conversion engine 228.

In the various embodiments, the TTS conversion engine 226 may include a text recognition system 406 and a pre-recorded message storage 408. For example, in initiating voice/text conversation mode, the wireless device may send a pre-recorded notification to the caller alerting that the user's speech will be machine-generated speech from a TTS conversion process, such as in blocks 314 and 322 as shown in FIG. 3A above. Such notifications may one of several pre-recorded options that may be selected by a user's input to the keypad 228. The components of the TTS conversion engine 226 may be implemented as separate devices, or may be logically separate modules within the same device.

The TTS conversion engine 226 may output data to the voice synthesizer 229, which may output a speech signal to the vocoder 208. The vocoder 208 may encode the speech signal into an encoded speech data packet, which may be modulated onto a carrier signal (not shown) and transmitted to the caller.

In an alternative embodiment, the conversion of user-inputted text into machine-generated speech and the conversion of the caller's speech into text while in voice/text conversation mode may be performed at a server to which the multi-SIM wireless device 200 may be connected. In an embodiment, the voice/text server may be integrated within a base station, and accessed through the access network of the SIM. In another embodiment, the voice/text server may be an independent server that is accessible to the wireless device over a wireless data network. For example, the wireless device 200 may be connected over WiFi to a voice/text server on a wireless data network.

Embodiments in which the conversions are performed on a network component (i.e., a voice/text server) may have a number of advantages, particularly for multi-SIM wireless devices that are not already configured with a TTS and/or STT conversion engine. Further, such embodiments allow sharing of processing resources such that multiple wireless devices may utilize the same conversion modules when operating in voice/text conversation mode. Further, server-based TTS and STT conversion engines may implement more sophisticated processing, leveraging the increased computing power available in servers compared to mobile communication devices.

FIG. 5 illustrates components of an embodiment voice/text server 500 and example data paths for conversion of text to voice and voice to text. Similar to wireless device 200, the various conversion components implemented in the voice/text server 500 may be physically and/or logically separate, integrated, or a combination thereof. A processor 502 may be connected to a memory 504. The processor 502 may include one or more microprocessors, microcontrollers, and/or digital signal processors that provide processing functions, as well as other calculation and control functionality. The processor 502 may access memory 504 for reading/writing data and/or software instructions for executing programmed functionality. The memory 504 may be onboard the processor 502 (e.g., within the same IC package), and/or the memory may be external memory to the processor and functionally coupled over a data bus.

The voice/text server 500 may include a conversion unit 506 that has various conversion components and a network interface 508. The network interface 508, which may include a modem and/or RF resources, may be wired and/or wireless for communicating over wireless data networks. The processor 502 may be connected to the conversion unit 506. An example conversion unit 506 may be configured with conversion components including, but not limited to, a vocoder 510, a STT conversion engine 512, a TTS conversion engine 514, and a voice synthesizer 516. Also, similar to the conversion components shown in FIGs. 2 and 4, the STT conversion engine 512 implemented within a server may include a speech recognition system and text generator, and the TTS conversion engine 514 implemented within a server may include a text recognition system and storage of pre-recorded messages.

Example conversion processing pathways for both speech and text are illustrated in FIG. 5. The text/voice server 500 may receive encoded speech data packets from the multi-SIM wireless device 200 via the network interface 508. The encoded speech data may be decoded by the vocoder 510, and the decoded speech signals may be passed to the STT conversion engine 512. Text data output from the STT conversion engine may be transmitted back to the wireless device 200 through the network interface 508.

In another pathway, the server may receive text data from the multi-SIM wireless device 200 via the network interface 508, which may be passed to the TTS conversion engine 514. The TTS conversion engine 514 may use a voice synthesizer to generate speech signals emulating the words in the original text data. The vocoder 510 may encode those speech signals into speech data packets, which may be transmitted back to the wireless device 200 via the network interface.

Thus, the wireless data network may enable connections to a voice/text server 500 that may perform some or all of the conversion processes for the wireless device. This embodiment may be well suited implementations in which a wireless device lacks computational resources, battery power, etc. necessary to execute the speech/text conversion mode processes alone. This embodiment may also be useful for devices that are not configured with TTS and/or STT conversion engines.

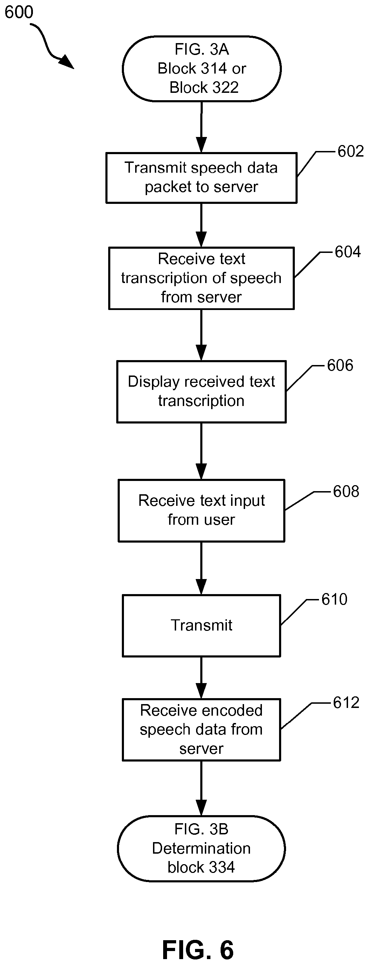

FIG. 6 illustrates an embodiment method 600 for utilizing conversion capabilities on a server to perform speech to text and text to speech functions for a wireless device communication in voice/text conversation mode. The operations of method 600 may be implemented by one or more processors of a dual-SIM device, such as a baseband processor 206 in the wireless device 200 described above with reference to FIG. 2.

Method 600 may have similar steps to those of method 300 described above with reference to FIG. 3A. Specifically, method 600 may implement the same or similar processes as method 300 through determination blocks 314 and 322. In block 602, the wireless device may transmit to a server (e.g., voice/text server 500 as shown in FIG. 5) packets of speech data from the incoming voice call or active call, depending on the user's selection in determination blocks 312 and 320. In block 604, the wireless device may receive a text transcription of the speech data from the server. In block 606, the wireless device may display the text transcription of the speech data. In block 608, the wireless device may receive user inputs in the form of text through an interface with a keypad, for example. In block 610, the wireless device may transmit packets of text data to the server for conversion into speech. In block 612, the wireless device may receive from the server encoded speech data packets including machine-generated speech data corresponding to the text data. Method 600 may proceed to determination block 334 of method 300, as shown in FIG. 3B, and may complete the remaining operations in method 300.

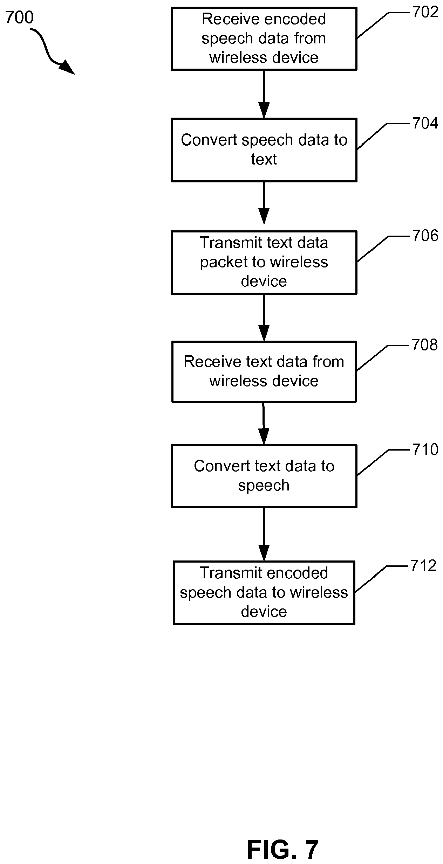

FIG. 7 illustrates an embodiment server method 700 for providing the conversion functions needed by the wireless device corresponding to method 600 illustrated in FIG. 6. In block 702, a server (e.g., the voice/text server 500 as shown in FIG. 5) may receive encoded speech data packets from a wireless device. In block 704, the server may convert the encoded speech data to a text representation (i.e., transcription) of the spoken words, using the components and/or operations discussed above with respect to FIG. 5. In block 706, the wireless device may transmit the text data to the wireless device via a data communication link. In block 708, the server may receive a text data packet from the wireless device via the data communication like. In block 710, the server may convert the received text data to encoded speech data using the components and/or operations discussed above with respect to FIG. 5. In block 712, the server may transmit encoded speech data packets to the wireless device.

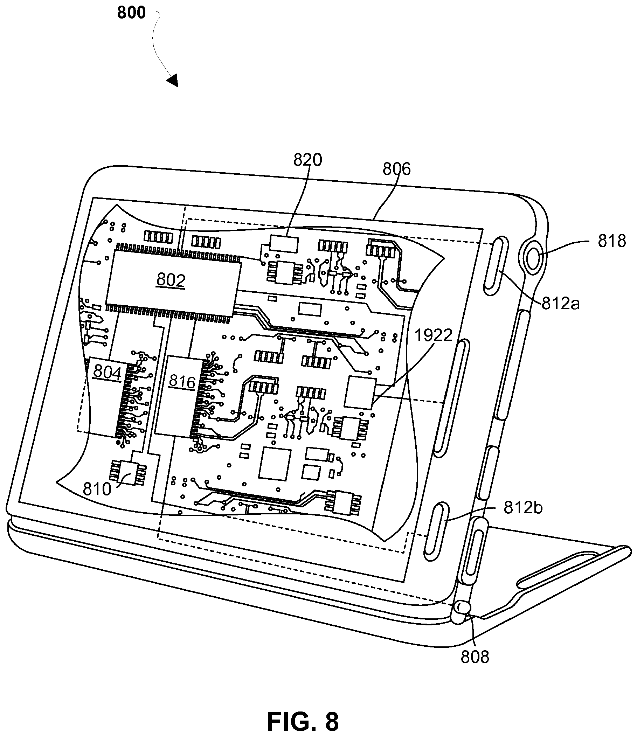

The various embodiments may be implemented in any of a variety of wireless devices, an example of which is illustrated in FIG. 8. For example, the wireless device 800 may include a processor 802 coupled to internal memories 804 and 810. Internal memories 804 and 810 may be volatile or non-volatile memories, and may also be secure and/or encrypted memories, or unsecure and/or unencrypted memories, or any combination thereof. The processor 802 may also be coupled to a touch screen display 806, such as a resistive-sensing touch screen, capacitive-sensing touch screen infrared sensing touch screen, or the like. Additionally, the display of the wireless device 800 need not have touch screen capability. Additionally, the wireless device 800 may have one or more antenna 808 for sending and receiving electromagnetic radiation that may be connected to one or more a wireless data link and/or cellular telephone transceiver 816 coupled to the processor 802. The wireless device 800 may also include physical buttons 812a and 812b for receiving user inputs. The wireless device 800 may also include a power button 818 for turning the wireless device 800 on and off. The wireless device 800 may also include a battery 820 coupled to the processor 802. The wireless device 800 may also include a position sensor 822, such as a GPS receiver, coupled to the processor 802.

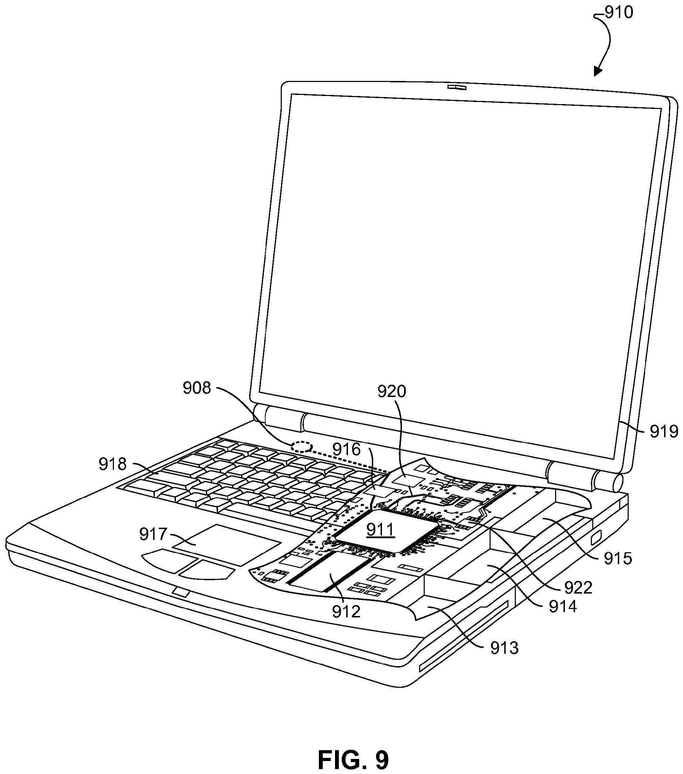

The various embodiments described above may also be implemented within a variety of personal computing devices, such as a laptop computer 910 as illustrated in FIG. 9. Many laptop computers include a touch pad touch surface 917 that serves as the computer's pointing device, and thus may receive drag, scroll, and flick gestures similar to those implemented on mobile computing devices equipped with a touch screen display and described above. A laptop computer 910 will typically include a processor 911 coupled to volatile memory 912 and a large capacity nonvolatile memory, such as a disk drive 913 of Flash memory. The laptop computer 910 may also include a floppy disc drive 914 and a compact disc (CD) drive 915 coupled to the processor 911. The laptop computer 910 may also include a number of connector ports coupled to the processor 911 for establishing data connections or receiving external memory devices, such as a USB or FireWire® connector sockets, or other network connection circuits for coupling the processor 911 to a network.

In a notebook configuration, the computer housing includes the touchpad 917, the keyboard 918, and the display 919 all coupled to the processor 911. The laptop computer 910 may also include a battery 920 coupled to the processor 911. The laptop computer 910 may also include a position sensor 922, such as a GPS receiver, coupled to the processor 911. Additionally, the laptop computer 910 may have one or more antenna 908 for sending and receiving electromagnetic radiation that may be connected to one or more a wireless data link and/or cellular telephone transceiver 916 coupled to the processor 911. Other configurations of the computing device may include a computer mouse or trackball coupled to the processor (e.g., via a USB input) as are well known, which may also be used in conjunction with the various embodiments.

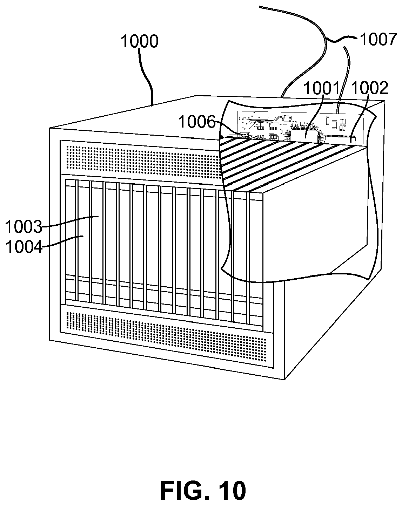

The various embodiments may also be implemented on any of a variety of commercially available server devices, such as the server 1000 illustrated in FIG. 10. Such a server 1000 typically includes a processor 1001 coupled to volatile memory 1002 and a large capacity nonvolatile memory, such as a disk drive 1003. The server 1000 may also include a floppy disc drive, compact disc (CD) or DVD disc drive 1004 coupled to the processor 1001. The server 1000 may also include network access ports 1006 coupled to the processor 1001 for establishing network interface connections with a network 1007, such as a local area network coupled to other broadcast system computers and servers, the Internet, the public switched telephone network, and/or a cellular data network (e.g., CDMA, TDMA, GSM, PCS, 3G, 4G, LTE, or any other type of cellular data network).

The processors 602, 911, and 1001 may be any programmable microprocessor, microcomputer or multiple processor chip or chips that can be configured by software instructions (applications) to perform a variety of functions, including the functions of the various embodiments described above. In some devices, multiple processors may be provided, such as one processor dedicated to wireless communication functions and one processor dedicated to running other applications. Typically, software applications may be stored in the internal memory 804, 810, 912, 913, 1002, and 1003 before they are accessed and loaded into the processors 802, 911, and 1001. The processors 802, 911, and 1001 may include internal memory sufficient to store the application software instructions. In many devices the internal memory may be a volatile or nonvolatile memory, such as flash memory, or a mixture of both. For the purposes of this description, a general reference to memory refers to memory accessible by the processors 802, 911, and 1001 including internal memory or removable memory plugged into the device and memory within the processor 802, 911, and 1001 themselves.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory processor-readable storage medium. The steps of a method or algorithm disclosed herein may be embodied in a processor-executable software module which may reside on a non-transitory computer-readable storage medium. Tangible, non-transitory processor-readable storage media may be any available media that may be accessed by a processor of a computer, mobile computing device or a wireless communication device. By way of example, and not limitation, such non-transitory processor-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a processor of a computing device. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory processor-readable media. Additionally, the operations of a method or algorithm may reside as one or any combination or set of codes and/or instructions on a tangible, non-transitory machine readable medium and/or non-transitory processor-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims and the principles and novel features disclosed herein.

## Claims

1. A method of maintaining simultaneous active calls on a multi-SIM wireless device, comprising:
receiving (302) an incoming voice call on a first radio frequency RF resource associated with a first SIM;
determining (304) whether the wireless device has an active voice call on a second RF resource associated with a second SIM; and
initiating (312) a voice/text conversation mode for processing one of the incoming voice call and the active voice call in response to determining that the wireless device has an active voice call on the second RF resource associated with the second SIM,
wherein the voice/text conversation mode comprises:
converting a caller's speech into text data;
displaying the text data on the wireless device;
receiving text inputs from a user;
converting the text inputs into machine-generated speech; and
transmitting the machine-generated speech to the caller.

2. The method of claim 1, wherein initiating the voice/text conversation mode for processing one of the incoming voice call and the active voice call comprises:
notifying the user of the incoming voice call;
selecting to enter the voice/text conversation mode; and
identifying which of the incoming voice call and the active voice call will be processed using the voice/text conversation mode.

3. The method of claim 2, wherein selecting to enter the voice/text conversation mode comprises outputting a prompt for user input and making a selection according to a user input received in response to the prompt.

4. The method of claim 2, wherein identifying which of the incoming voice call and the active voice call will be processed using the voice/text conversation mode is based on a user input.

5. The method of claim 2, further comprising sending a notification to a caller of the incoming voice call that the incoming voice call will be conducted in voice/text conversation mode in response to receiving a user input selecting to use the voice/text conversation mode for processing the incoming voice call.

6. The method of claim 2, further comprising sending a notification to a caller of the active voice call that the active voice call will be switched to voice/text conversation mode in response to receiving a user input selecting to use the voice/text conversation mode for processing the active voice call.

7. The method of claim 1, wherein initiating the voice/text conversation mode for processing one of the incoming voice call and the active voice call comprises:
notifying the user of the incoming voice call; and
automatically entering the voice/text conversation mode when a set of pre-determined rules are satisfied.

8. The method of claim 5, further comprising:
determining whether the active voice call has terminated; and
requesting user input for selecting whether to end use of the voice/text conversation mode for processing the incoming voice call in response to determining that the active voice call has terminated.

9. The method of claim 5, wherein sending a notification to a caller of the incoming voice call that the call will be conducted in the voice/text conversation mode comprises sending a pre-recorded audio message to the caller, wherein the pre-recorded audio message informs the caller that the caller's voice will be converted to text for display to the user and user responses will be heard via machine-generated speech.

10. The method of claim 1, wherein:
converting a caller's speech into text data comprises:
sending the caller's speech to a server capable of speech-to-text conversion; and
receiving from the server a text transcription of the caller's speech; and converting the text inputs into machine-generated speech comprises:
sending the text inputs to a server configured to convert text into machine-generated speech data; and
receiving from the server speech data packets including the machine-generated speech data.

11. A wireless device, comprising:
means arranged to perform the steps of any one of claims 1 to 10.

12. A non-transitory processor-readable storage medium having stored thereon processor-executable instructions arranged to perform the steps of any one of claims 1 to 10.

## Patentansprüche

1. Ein Verfahren zum Aufrechterhalten von gleichzeitigen aktiven Anrufen in einem drahtlosen Gerät mit mehreren SIMs, aufweisend:
Empfangen (302) eines eingehenden Sprachanrufs auf einer ersten Hochfrequenz (HF)-Ressource, die mit einer ersten SIM assoziiert ist,
Bestimmen (304), ob das drahtlose Gerät einen aktiven Sprachanruf auf einer zweiten HF-Ressource, die mit einer zweiten SIM assoziiert ist, aufweist, und
Einleiten (312) eines Sprache/Text-Konversationsmodus für das Verarbeiten des eingehenden Sprachanrufs oder des aktiven Sprachanrufs in Antwort darauf, dass bestimmt wird, dass das drahtlose Gerät einen aktiven Sprachanruf auf der zweiten HF-Ressource, die mit der zweiten SIM assoziiert ist, aufweist,
wobei der Sprache/Text-Konversationsmodus aufweist:
Wandeln der Sprache eines Anrufers zu Textdaten,
Anzeigen der Textdaten an dem drahtlosen Gerät,
Empfangen von Texteingaben von einem Benutzer,
Wandeln der Texteingaben zu maschinell generierter Sprache, und
Senden der maschinell generierten Sprache an den Anrufer.

2. Verfahren nach Anspruch 1, wobei das Einleiten des Sprache/Text-Konversationsmodus für das Verarbeiten des eingehenden Sprachanrufs oder des aktiven Sprachanrufs aufweist:
Benachrichtigen des Benutzers des eingehenden Sprachanrufs,
Auswählen des Eintretens in den Sprache/Text-Konversationsmodus, und
Identifizieren, welcher des eingehenden Sprachanrufs oder des aktiven Sprachanrufs unter Verwendung des Sprache/Text-Konversationsmodus verarbeitet wird.

3. Verfahren nach Anspruch 2, wobei das Auswählen des Eintretens in den Sprache/Text-Konversationsmodus das Ausgeben einer Aufforderung für eine Benutzereingabe und das Vornehmen einer Auswahl gemäß einer in Antwort auf die Aufforderung empfangenen Benutzereingabe aufweist.

4. Verfahren nach Anspruch 2, wobei das Identifizieren, welcher des eingehenden Sprachanrufs oder des aktiven Sprachanrufs unter Verwendung des Sprache/Text-Konversationsmodus verarbeitet wird, auf einer Benutzereingabe basiert.

5. Verfahren nach Anspruch 2, das weiterhin das Senden einer Benachrichtigung an einen Anrufer des eingehenden Sprachanrufs dazu, dass der eingehende Sprachanruf in einem Sprache/Text-Konversationsmodus durchgeführt wird, in Antwort auf das Empfangen einer Benutzereingabe zum Auswählen des Verwendens des Sprache/Text-Konversationsmodus für das Verarbeiten des eingehenden Sprachanrufs aufweist.

6. Verfahren nach Anspruch 2, das weiterhin das Senden einer Benachrichtigung an einen Anrufer des aktiven Sprachanrufs dazu, dass der aktive Sprachanruf zu dem Sprache/Text-Konversationsmodus gewechselt wird, in Antwort auf das Empfangen einer Benutzereingabe zum Auswählen des Verwendens des Sprache/Text-Konversationsmodus für das Verarbeiten des aktiven Sprachanrufs aufweist.

7. Verfahren nach Anspruch 1, wobei das Einleiten des Sprache/Text-Konversationsmodus für das Verarbeiten des eingehenden Sprachanrufs oder des aktiven Sprachanrufs aufweist:
Benachrichtigen des Benutzers des eingehenden Sprachanrufs, und
automatisches Eintreten in den Sprache/Text-Konversationsmodus, wenn ein Satz von vorbestimmten Regeln erfüllt wird.

8. Verfahren nach Anspruch 5, das weiterhin aufweist:
Bestimmen, ob der aktive Sprachanruf beendet wurde, und
Anfragen einer Benutzereingabe für das Auswählen, ob die Verwendung des Sprache/Text-Konversationsmodus für das Verarbeiten des eingehenden Anrufs beendet werden soll, in Antwort auf das Bestimmen, dass der aktive Sprachanruf beendet wurde.

9. Verfahren nach Anspruch 5, wobei das Senden einer Benachrichtigung an einen Anrufer des eingehenden Sprachanrufs dazu, dass der Anruf in dem Text/Sprache-Konversationsmodus durchgeführt wird, das Senden einer zuvor aufgezeichneten Audionachricht an den Anrufer aufweist, wobei die zuvor aufgezeichnete Audionachricht den Anrufer darüber informiert, dass die Sprache des Anrufers zu einem Text für die Anzeige für den Benutzer gewandelt wird und Antworten des Benutzers mittels einer maschinell generierten Sprache gehört werden.

10. Verfahren nach Anspruch 1, wobei:
das Wandeln der Sprache eines Anrufers zu Textdaten aufweist:
Senden der Sprache des Anrufers zu einem Server, der zu einer Sprache-zu-Text-Wandlung befähigt ist, und
Empfangen, von dem Server, einer Texttranskription der Sprache des Anrufers, und
das Wandeln der Texteingaben zu maschinell generierter Sprache aufweist:
Senden der Texteingaben an einen Server, der konfiguriert ist, um Text zu maschinell generierten Sprachdaten zu wandeln, und
Empfangen, von dem Server, von Sprachdatenpaketen einschließlich der maschinell generierten Sprachdaten.

11. Ein drahtloses Gerät, das aufweist:
Mittel, die angeordnet sind zum Durchführen der Schritte gemäß einem der Ansprüche 1 bis 10.

12. Ein nicht-transitorisches, prozessorlesbares Speichermedium mit darauf gespeicherten prozessorausführbaren Befehle, die vorgesehen sind, um die Schritte gemäß einem der Ansprüche 1 bis 10 durchzuführen.

## Revendications

1. Un procédé de maintien d'appels actifs simultanés sur un dispositif sans fil à plusieurs cartes SIM, comprenant :
la réception (302) d'un appel vocal entrant sur une première ressource de fréquence radio RF associée à une première carte SIM,
la détermination (304) si le dispositif sans fil possède un appel vocal actif sur une deuxième ressource RF associée à une deuxième carte SIM, et
le lancement (312) d'un mode de conversation voix/texte destiné au traitement d'un appel parmi l'appel vocal entrant et l'appel vocal actif en réponse à la détermination que le dispositif sans fil possède un appel vocal actif sur la deuxième ressource RF associée à la deuxième carte SIM,
où le mode de conversation voix/texte comprend :
la conversion des paroles d'un appelant en données textuelles,
l'affichage des données textuelles sur le dispositif sans fil,
la réception d'entrées textuelles à partir d'un utilisateur,
la conversion des entrées textuelles en paroles générées par ordinateur, et
la transmission des paroles générées par ordinateur à l'appelant.

2. Le procédé selon la Revendication 1, où le lancement du mode de conversation voix/texte destiné au traitement d'un appel parmi l'appel vocal entrant et l'appel vocal actif comprend :
la notification de l'utilisateur de l'appel vocal entrant,
la sélection d'entrer dans le mode de conversation voix/texte, et
l'identification de l'appel parmi l'appel vocal entrant et l'appel vocal actif qui sera traité au moyen du mode de conversation voix/texte.

3. Le procédé selon la Revendication 2, où la sélection d'entrer dans le mode de conversation voix/texte comprend la production en sortie d'une invite pour une entrée d'utilisateur et l'exécution d'une sélection en fonction d'une entrée d'utilisateur reçue en réponse à l'invite.

4. Le procédé selon la Revendication 2, où l'identification de l'appel parmi l'appel vocal entrant et l'appel vocal actif qui sera traité au moyen du mode de conversation voix/texte est basée sur une entrée d'utilisateur.

5. Le procédé selon la Revendication 2, comprenant en outre l'envoi d'une notification à un appelant de l'appel vocal entrant indiquant que l'appel vocal entrant sera conduit en mode de conversation voix/texte en réponse à la réception d'une entrée d'utilisateur sélectionnant l'utilisation du mode de conversation voix/texte de façon à traiter l'appel vocal entrant.

6. Le procédé selon la Revendication 2, comprenant en outre l'envoi d'une notification à un appelant de l'appel vocal actif indiquant que l'appel vocal actif sera commuté vers le mode de conversation voix/texte en réponse à la réception d'une entrée d'utilisateur sélectionnant l'utilisation du mode de conversation voix/texte de façon à traiter l'appel vocal actif.

7. Le procédé selon la Revendication 1, où le lancement du mode de conversation voix/texte destiné au traitement d'un appel parmi l'appel vocal entrant et l'appel vocal actif comprend :
la notification de l'utilisateur de l'appel vocal entrant, et
l'entrée automatique dans le mode de conversation voix/texte lorsqu'un ensemble de règles prédéterminées sont satisfaites.

8. Le procédé selon la Revendication 5, comprenant en outre :
la détermination si l'appel vocal actif est achevé, et
la demande d'une entrée d'utilisateur destinée à la sélection s'il convient de mettre fin à l'utilisation du mode de conversation voix/texte de façon à traiter l'appel vocal entrant en réponse à la détermination que l'appel vocal actif est achevé.

9. Le procédé selon la Revendication 5, où l'envoi d'une notification à un appelant de l'appel vocal entrant indiquant que l'appel sera conduit dans le mode de conversation voix/texte comprend l'envoi d'un message audio préenregistré à l'appelant, où le message audio préenregistré informe l'appelant que la voix de l'appelant sera convertie en texte pour un affichage à l'utilisateur et les réponses de l'utilisateur seront entendues par l'intermédiaire de paroles générées par ordinateur.

10. Le procédé selon la Revendication 1, où :
la conversion des paroles d'un appelant en données textuelles comprend :
l'envoi des paroles d'un appelant à un serveur capable d'effectuer une conversion paroles en texte, et
la réception à partir du serveur d'une transcription textuelle des paroles d'un appelant, et
la conversion des entrées textuelles en paroles générées par ordinateur comprend :
l'envoi des entrées textuelles à un serveur configuré de façon à convertir du texte en données de paroles générées par ordinateur, et
la réception à partir du serveur de paquets de données de paroles contenant les données de paroles générées par ordinateur.

11. Un dispositif sans fil, comprenant :
un moyen agencé de façon à exécuter les opérations selon l'une quelconque des Revendications 1 à 10.

12. Un support à mémoire lisible par un processeur non transitoire possédant conservées en mémoire sur celui-ci des instructions exécutables par un processeur agencées de façon à exécuter les opérations selon l'une quelconque des Revendications 1 à 10.
